Europäisches Patentamt

European Patent Office

Office européen des brevets

(19)

(11) Veröffentlichungsnummer: **0 026 388**
**B1**

(12) **EUROPÄISCHE PATENTSCHRIFT**

(45) Veröffentlichungstag der Patentschrift:
21.09.83

(51) Int. Cl.³: **C 09 D 7/12, C 08 K 7/22**

(21) Anmeldenummer: 80105518.7

(22) Anmeldetag: 13.09.80

(54) Verwendung von feinteilige Hohlkörper enthaltenden Beschichtungsmassen.

(30) Priorität: 27.09.79 DE 2939141

(43) Veröffentlichungstag der Anmeldung:
08.04.81 Patentblatt 81/14

(45) Bekanntmachung des Hinweises auf die Patenterteilung:
21.09.83 Patentblatt 83/38

(84) Benannte Vertragsstaaten:
AT BE CH DE FR GB IT LI NL SE

(56) Entgegenhaltungen:
DE-A-1 669 156
FR-A-1 396 444
FR-A-2 306 246
GB-A-1 399 344
US-A-3 642 675

Die Akte enthält technische Angaben, die nach dem Eingang der Anmeldung eingereicht wurden und die nicht in dieser Patentschrift enthalten sind.

(73) Patentinhaber: BASF Farben + Fasern Aktiengesellschaft, Am Neumarkt 30,
D-2000 Hamburg 70 (DE)

(72) Erfinder: Blum, Rainer, Bannwasserstrasse 58,
D-6700 Ludwigshafen-Edigheim (DE)
Erfinder: Kaczinski, Friedrich, Drachterstrasse 11,
D-4400 Münster (DE)
Erfinder: Seitz, Max, Hamsens Busch 32,
D-4400 Münster (DE)

(74) Vertreter: Habbel, Hans-Georg, Dipl.-Ing.,
Postfach 3429 Am Kanonengraben 11, D-4400 Münster
(DE)

ACTORUM AG

Verwendung von feinteilige Hohlkörper enthaltenden Beschichtungsmassen

Die Erfindung bezieht sich auf die Verwendung von Beschichtungsmassen auf der Basis von natürlichen und Kunstharzbindemitteln in Form von Plastisolen, Organosolen oder wässrigen Dispersionen oder in Form von Lösungen in organischen Lösungsmitteln, die gegebenenfalls Pigmente, Farbstoffe, Füllstoffe, Wärme- und Lichtstabilisatoren, Haftvermittler und andere Additive enthalten. Es sind fliessfähige oder pastöse Massen, die bei Raumtemperatur oder beim Erwärmen auf höhere Temperaturen verfilmen und nach dem Abkühlen eine feste zäh-elastische Masse bilden. Diese Beschichtungsmassen werden verwendet für den Unterbodenschutz von Fahrzeugen, insbesondere von Kraftfahrzeugen.

Besonders gefährdete Teile von Kraftfahrzeugen durch Steinschlag, Korrosion und Abrieb sind der Unterboden, die Unterseite der Kotflügel und die Türschweller. Deshalb erhalten diese Teile in der Regel zu den üblichen Schutzbehandlungen durch Phosphatierung und Lackierung, die nur relativ dünne Schichten von ca. 2 bis 150 µm ausbilden, zusätzlich eine dicke Schutzschicht bis zu einer Stärke von zum Teil 7 mm. Diese zusätzlichen dicken Schichten werden als «Unterbodenschutz» bezeichnet. Die hierfür erforderlichen Beschichtungsmassen werden im folgenden Text als «Unterbodenschutzmassen» bezeichnet. Geeignete Zusammensetzungen sind aus der Literatur bekannt.

So werden Unterbodenschutzmassen, deren Bindemittelbasis aus Vinylchlorid-Homopolymerisaten oder Mischpolymerisaten mit einer anderen Vinylverbindung, wie z.B. Vinylidenchlorid, Vinylacetat oder Vinylpropionat, besteht, z.B. in der DE-C-1 284 548, DE-C-1 069 314, DE-C-2 123 171, DE-C-2 840 996 und der DE-C-2 512 366 beschrieben.

Die Verwendung von Acrylat- bzw. Methacrylat-Polymeren oder -Copolymeren als Bindemittel für Unterbodenschutzmassen geht aus der DE-C-2 722 752, DE-C-2 454 235 und der DE-C-2 529 732 hervor.

Weitere bekanntgewordene Bindemittel sind z.B. Asphalte, Bitumen, Wachse und Kautschuk, wie sie z.B. in der DE-C-2 710 928 und in dem Buch von K. Weinmann: «Beschichten mit Lacken und Kunststoffen», Verlag W.A. Colomb, Stuttgart, 1967, genannt werden.

Es ist auch schon versucht worden, Unterbodenschutzmassen aus wässrigen Dispersionen der vorstehend aufgeführten Bindemittel und von Butadien-Styrol-Mischpolymerisaten zu formulieren (DE-C-2 807 141).

Liegen die Unterbodenschutzmassen in Form von Plastisolen vor, so wird deren flüssige Phase von Weichmachern gebildet, wie Trikresylphosphat, Acetylbutylcitrat, Diester der Phthalsäure, Adipinsäure und Sebazinsäure mit gesättigten und ungesättigten Alkoholen, z.B. Dioctylphthalat, Diisooctylphthalat, Dinonylphthalat, Diallylphthalat, Didecylphthalat. Andere geeignete Weichmacher gehören zu den Gruppen der gesättigten und ungesättigten flüssigen Polyester und der flüssigen Epoxidverbindungen. Der Gehalt an Weichmachern wird bei den Plastisolen so bemessen, dass er ausreichend ist, um ein Plastisol von flüssiger bis pastenförmiger Konsistenz zu bilden.

Organosole enthalten noch zusätzlich nicht oder nur wenig lösende bzw. quellende Verdünnungsmittel, wie z.B. Benzinkohlenwasserstoff.

Die Unterbodenschutzmassen können noch eine Reihe von Hilfsstoffen und Additiven, z.B. zur Regulierung der Viskosität, der Geliergeschwindigkeit, der Verbesserung der Licht- und Wärmestabilität und der Lagerstabilität enthalten. Um die Haftung auf den zu beschichtenden Gegenständen zu verbessern, können sie bekannte haftverbessernde Zusätze enthalten. Mit der Haftverbesserung auf Metalloberflächen beschäftigen sich eine Reihe von Veröffentlichungen, z.B. die US-A-3 050 412, die DE-B-2 123 171, die DE-B-2 232 885 und die DE-A-2 512 366.

Die Unterbodenschutzmassen werden in der Regel in Spritz- oder Streichverfahren aufgetragen. Bei der Verwendung von Metallen kann die Beschichtung direkt auf das unvorbehandelte Metall aufgebracht werden. Vorteilhafter ist jedoch die Beschichtung von vorbehandelten phosphatierten, grundierten oder lackierten Metalloberflächen. Die Unterbodenschutzmassen verfilmen bei Raumtemperatur oder beim Erwärmen auf höhere Temperaturen. Bevorzugt werden zum Herstellen von ausgehärteten Filmen Einbrenntemperaturen zwischen 100 und 250 °C benötigt.

Aus technologischen und wirtschaftlichen Gründen enthalten die Unterbodenschutzmassen ausser den farbgebenden Pigmenten, z.B. Titandioxid, Eisenoxidpigmente, Kadmiumpigmente, verhältnismässig hohe Anteile an Füllstoffen, wie z.B. Talkum, Kreide, Kaolin, Asbest, Kieselgur, Schiefermehl, Bariumsulfat, Quarz und andere Mineralien.

Da diese Füllstoffe ein sehr hohes spezifisches Gewicht haben, beträgt die Dichte der die bekannten Füllstoffe enthaltenden Unterbodenschutzmassen zwischen 1,5 und 1,9. Um einen guten Unterbodenschutz bei Kraftfahrzeugen zu erreichen, sind verhältnismässig hohe Schichtstärken erforderlich. Bei einer Schichtdicke von 2 bis 7 mm bedeutet das, dass für einen PKW beispielsweise 20 bis 40 kg der Unterbodenschutzmasse benötigt werden. Das durch die hohe Dichte der Beschichtungsmasse hervorgerufene verhältnismässig hohe Gewicht der auf dem Kraftfahrzeug aufgebrachten Unterbodenschutzmasse ist ein Nachteil.

Aus der US-A-3 642 675 ist ein Autolack auf Basis eines in organischen Lösungsmitteln gelösten Alkydharzes bekannt, der Hohlkugeln aus Glas und Glaskugeln enthält, wobei der Durchmesser der Glaskugeln kleiner ist als der Durchmesser der Hohlkugeln. Die aufgebrachte Lackschicht wird geschliffen, wobei die Hohlkugeln geöffnet werden und eine glatte matte glanzfreie Oberfläche ergeben. Bei der Aussenlackierung von Autos wird vorgeschrieben, dass die geschliffene Oberfläche mit einer Wachsschicht überzogen wird. Eine derartige Wachsbehandlung ist auch notwendig, damit die Hohlräume ausgefüllt werden können und der Korrosionsschutz verbessert wird. Die leichte Zerstörung der Hohlkugeln durch einfaches Schleifen und das nachfolgende Ausfüllen der Hohlkugelvertiefungen mit Wachs wird jeden Fachmann davon abhalten, ein derartiges Überzugsmittel als Unterbodenschutzmasse für Kraftfahrzeuge und als Antidröhnmasse zu verwenden.

Der vorliegenden Erfindung liegt die Aufgabe zugrunde, das hohe spezifische Gewicht der Unterbodenschutzmasse zu senken, was gleichbedeutend ist mit einer Verringerung der Gesamtmasse des Kraftfahrzeuges. Das ist aus Gründen eines treibstoffsparenden Betriebes des Kraftfahrzeuges dringend erwünscht.

Diese Aufgabe wurde gelöst durch die Verwendung einer Beschichtungsmasse auf der Basis von natürlichen und Kunstharz-Bindemitteln in Form von Plastisolen, Organosolen oder wässrigen Dispersionen oder in Form von Lösungen in organsichen Lösungsmitteln, die als Füllstoff feinteilige Hohlkörper enthält, deren Wandmaterial organischer Natur aus der Gruppe des Polyurethans, Polyethylens, Polyacrylats, Polystyrols, der Gelatine oder anorganischer Natur ist, als Unterbodenschutzmasse für Kraftfahrzeuge oder als Verklebmasse oder Abdichtmasse oder Antidröhnmasse für Metallgegenstände oder für Beschichtungen auf unvorbehandelten, vorbehandelten, phosphatierten, grundierten oder vorlackierten Metallen.

In einer besonders bevorzugten Ausführungsform enthält die Unterbodenschutzmasse als Füllstoff eine Mischung aus Kokspulver und/oder Kohlepulver und feinteiligen Hohlkörpern.

In einer bevorzugten Ausführungsform enthält die Unterbodenschutzmasse 0 bis 90 Gewichtsprozent Pigmente, Farb- und Füllstoffe und 10 bis 100 Gewichtsprozent feinteilige Hohlkörper und gegebenenfalls Koks- und/oder Kohlepulver, bezogen auf 100 Gewichtsprozent der Gesamtmenge von Pigmenten, Farb- und Füllstoffen, feinteiligen Hohlkörpern und gegebenenfalls Koks- und/oder Kohlepulvern.

Hohlkörper im Sinne der Erfindung haben einen maximalen Durchmesser von ca. 1 µm bis ca. 1000 µm. Bevorzugt wird runde Kugelform. Es sind jedoch auch beliebig deformierte Kugeln verwendbar.

Die Hohlkörper bestehen aus einer Wandung, die im wesentlichen gasdicht sein muss und einen gasgefüllten Hohlraum umschliesst. Das einzelne Hohlkörperteilchen braucht nicht nur eine Wand und einen Hohlraum zu besitzen, sondern der Hohlraum kann durch eine bis zahlreiche Wände unterteilt sein, so dass die Hohlkörper auch eine porös-zellige Struktur besitzen können. Das Verhältnis der Wanddicke zum Hohlraum ist so, dass eine Dichte von 0,05 g/cm³ bis 1,5 g/cm³ resultiert.

Die Wandungen der Hohlkörper können aus organischem oder anorganischem Material bestehen. Als organisches Wandmaterial sind geeignet: Polyurethan, Polyäthylen, Polyacrylat, Polystyrol, Gelatine u.a.

Als anorganisches Wandmaterial ist geeignet: Synthetisches oder natürliches Glas, Mineralien, wie Basalt, Bauxid oder Hochofenasche.

Koks- oder Kohlepulver, die im Sinne der Erfindung geeignet sind, haben natürlichen oder synthetischen Ursprung und sind fein gemahlene Pulver von Kohle, Koks, Braunkohle, Braunkohlekoks, Holzkohle und Steinkohle.

Diese Pulver haben eine Kornfeinheit zwischen 0,5 und 1000 µm und können beispielsweise durch Nassvermahlen bzw. Mikronisieren und anschliessendes Windsichten der entsprechenden Kohlearten hergestellt werden. Überraschenderweise lassen sich die beanspruchten Koks- und Kohlepulver in grossen Mengen zusätzlich zu den feinteiligen Hohlkörpern in die Unterbodenschutzmassen einarbeiten, wodurch es möglich ist, preisgünstige hochgefüllte, hervorragend widerstandsfähige Unterbodenschutzmassen mit aussergewöhnlich niedriger Dichte zu formulieren.

Mit der Herabsetzung des spezifischen Gewichtes bewirkt die zusätzliche Verwendung der Koks- oder Kohlepulver gleichzeitig überraschenderweise eine Verbesserung der Verarbeitbarkeit der Unterbodenschutzmasse beim Verspritzen aus einer Hochdruckspritzapparatur. Sie erhöhen ausserdem die Widerstandsfähigkeit der Überzüge gegen mechanische Beschädigung.

Das Einarbeiten der Hohlkörper sowie der Koks- oder Kohlepulver in die erfindungsgemässen Unterbodenschutzmassen kann mit den in der Lackindustrie gebräuchlichen Dispergiergeräten erfolgen, wobei allerdings die Scherkraft der Geräte so eingestellt sein muss, dass die Hohlkörper nicht oder nur in geringem Masse beschädigt werden.

Überraschenderweise lassen sich die Hohlkörper in grossen Mengen in die Plastisole einarbeiten und reduzieren die Dichte der beanspruchten Beschichtungsmassen auf einen Wert zwischen 0,3 und 1,3 g/cm³, vorzugsweise zwischen 0,5 und 1,0 g/cm³. Um eine optimale Herabsetzung der Dichte zu erreichen, werden die feinteiligen Hohlkörper als alleinige Füllstoffe eingesetzt. Nur dann, wenn gewünschte Werte für Korrosionsschutz oder Schalldämpfung eingestellt werden sollen, können Mischungen mit Koks- oder Kohlepulver oder mit anderen Pigmenten, Farbstoffen oder Füllstoffen eingesetzt werden. In diesen Fällen können die Mischungen 0 bis 90 Gewichtsprozent Pigmente, Farbstoffe oder Füllstoffe und 10 bis 100 Gewichtsprozent feinteilige Hohlkörper und gegebenenfalls Koks- und/oder Kohlepulver, bezogen auf 100 Gewichtsprozent der Gesamtmenge von Pigmenten, Farb- und Füllstoffen, feinteiligen Hohlkörpern und gegebenenfalls Koks- und Kohlepulver enthalten.

Die erfindungsgemässen Beschichtungsmassen finden ausser als Unterbodenschutzmasse für Fahrzeuge, insbesondere Kraftfahrzeuge, auch Verwendung zur Bildung von schalldämpfenden und gegen Korrosion und Steinschlag schützenden Überzügen auf Metallen, z.B. für Klimaschächte und Metalltüren. Ein weiteres sehr wichtiges Anwendungsgebiet ist die Verwendung als Metallverklebungsmittel und für Nahtabdichtungen.

Die nachfolgenden Beispiele sollen die Erfindung erläutern. Angaben über Prozente sind Gewichtsprozente, Teile sind Gewichtsteile.

Beispiel 1 (Vergleichsbeispiel)

23 Teile Emulsions-PVC, K-Wert 78
14 Teile Dioctylphthalat
8 Teile Di-isodecylphthalat
3 Teile epoxidiertes Sojaöl
8 Teile Butyl-Benzyl-Phthalat
1,5 Teile Polyamidamin (Aminzahl 290)
0,5 Teile Bariumstearat
3 Teile feinteiliges, amorphes $SiO_2$, ca. 200 m²/g
38 Teile Kreide (Calcit)
1 Teil Eisenoxidschwarz

werden im Planetenmischer 20 Minuten zu einer homogenen Paste verknetet und durch kurzes Anlegen von Vakuum entgast. Die erhaltene Beschichtungsmasse ist von hellgrauer Farbe und hat eine Dichte von 1,436. Es wird mittels einer Hochdruckspritzanlage auf die Unterseite von Metallkarossen als Unterbodenschutz aufgespritzt und 20 Minuten bei 175 °C eingebrannt. Es wird eine elastische schwach graue Beschichtung erhalten.

Beispiel 2 (Vergleichsbeispiel)

Es wird wie in Beispiel 1 verfahren, nur mit dem Unterschied, dass anstelle der 38 Teile Kreide und des 1 Teil Eisenoxidschwarz 39 Teile feinst gemahlene Anthrazitkohle im gleichen Gewicht eingesetzt wird. Die Anthrazitkohle hat eine Korngrössenverteilung von 2 bis 60 µm. Die Beschichtungsmasse ist schwarz und hat eine Dichte von 1,24. Es wird wie in Beispiel 1 weiterverarbeitet, und man erhält eine schwarze Beschichtung.

Beispiel 3

Es wird wie in Beispiel 1 verfahren, nur mit dem Unterschied, dass anstelle von 38 Teilen Kreide nur 28 Teile Kreide und 10 Teile Glashohlkugeln von 30 bis 150 µm Durchmesser und einer Dichte von 0,203 eingesetzt werden. Die Beschichtungsmasse hat eine Dichte von 0,81. Es wird wie bei Beispiel 1 weiterverfahren, und man erhält eine elastische hellgraue Beschichtung.

Beispiel 4

Es wird wie im Vergleichsbeispiel 2 verfahren, aber zusätzlich werden 20 Teile der Glashohlkugeln aus Beispiel 3 eingesetzt. Die Beschichtungsmasse hat eine Dichte von 0,62. Es werden schwarze Beschichtungen erhalten.

Beispiel 5 (Vergleichsbeispiel)

50 Teile Butadien-Styrol-Copolymerdispersion in Wasser mit 50% Feststoffgehalt
20 Teile Calcit, feingemahlen
10 Teile Eisenoxidschwarz
2 Teile Netzmittel auf Basis Polyacrylsäure
2 Teile Butylglykol
0,5 Teile Entschäumer
15 Teile Wasser
0,5 Teile handelsüblicher Verdicker auf Basis vernetzter Polyacrylsäure.

Die Rezeptbestandteile werden in der angegebenen Reihenfolge in einen Planetenmischer mit zusätzlichem Dissolverwerkzeug eingefüllt und mit hochtourig laufendem Dissolver dispergiert. Die erhaltene schwarze Unterbodenschutzmasse hat eine Dichte von 1,26 und lässt sich bei 140 °C in 20 Min. zu einer elastischen Schutzschicht härten.

Beispiel 6

Es wird wie in Beispiel 5 gearbeitet. Nach ausreichender Feindispergierung wird das Dissolverwerkzeug abgestellt und bei weiterlaufendem Planetenmischwerkzeug werden zugemischt 10 Teile feinteilige Hohlkugeln aus vernetztem Polyurethan mit einer Dichte von 0,22. Die erhaltene Unterbodenschutzmasse hat eine Dichte von 0,86 und lässt sich bei 140 °C in 20 Min. zu einer elastischen Schutzschicht härten.

Patentansprüche

1. Verwendung einer Beschichtungsmasse auf der Basis von natürlichen und/oder Kunstharz-Bindemitteln in Form von Plastisolen, Organosolen oder wässrigen Dispersionen oder in Form von Lösungen in organischen Lösungsmitteln, die als Füllstoff feinteilige Hohlkörper enthält, deren Wandmaterial aus Polyurethan, Polyethylen, Polyacrylat, Polystyrol, Gelatine oder aus anorganischem Material besteht und die gegebenenfalls Pigmente, Farbstoffe, Haftvermittler und übliche Hilfsstoffe enthält, als Unterbodenschutzmasse für Kraftfahrzeuge oder als Verklebmasse oder Abdichtmasse oder Antidröhnmasse für Metallgegenstände.

2. Verwendung der Beschichtungsmasse nach Anspruch 1, dadurch gekennzeichnet, dass die feinteiligen Hohlkörper nur einen Hohlraum besitzen.

3. Verwendung der Beschichtungsmasse nach Anspruch 1, dadurch gekennzeichnet, dass die Hohlkörper mehrere Hohlräume in Form einer zelligen Innenstruktur besitzen.

4. Verwendung der Beschichtungsmasse nach den Ansprüchen 1 bis 3, dadurch gekennzeichnet, dass die feinteiligen Hohlkörper gegen die flüssige Phase der Beschichtungsmasse im wesentlichen dicht sind.

5. Verwendung der Beschichtungsmasse nach den Ansprüchen 1 bis 4, dadurch gekennzeichnet, dass sie als zusätzlichen Füllstoff Kokspulver und/oder Kohlepulver enthält.

## Claims

1. Use of a coating composition based on natural binders and/or synthetic resin binders, in the form of plastisols, organosols or aqueous dispersions or in the form of solutions in organic solvents, which contains finely particulate hollow bodies as filler, the wall material of said hollow bodies consisting of polyurethane, polyethylene, polyacrylate, polystyrene, gelatine or of anorganic material and which coating composition optionally contains pigments, dyestuffes, adhesion agents and customary auxiliaries as an underbody sealing composition for motor vehicles or as adhesive composition or sealing compound or anti-drumming composition for metal articles.

2. Use of the coating composition according to claim 1, characterized in that the finely particulate hollow bodies possess only one cavity.

3. Use of the coating composition according to claim 1, characterized in that the hollow bodies each possess several cavities in the form of a cellular internal structure.

4. Use of the coating composition according to claims 1 to 3, characterized in that the finely particulate hollow bodies are substantially impermeable to the liquid phase of the coating composition.

5. Use of the coating composition according to claims 1 to 4, characterized in that it contains coke powder and/or coal powder as an additional filler.

## Revendications

1. Utilisation d'une matière de revêtement à base de liants en résine naturelles et/ou synthétiques, sous la forme de plastisols, d'organosols ou de dispersions aqueuses, ou sous la forme de solutions dans des solvants organiques, qui contient en tant que charge des corps creux finement divisés dont le matériau de paroi est en polyuréthane, en polyéthylène, en polyacrylate, en polystyrène, en gélatine ou en un matériau inorganique et qui contient éventuellement des pigments, des colorants, des tiers-solvants et des adjuvants courants, en tant que matières de protection sous châssis pour véhicules à moteur, ou en tant que matières de collage ou matières d'étanchéité ou matières d'insonorisation pour objets métalliques.

2. Utilisation de la matière de revêtement selon la revendication 1, caractérisée en ce que les corps creux finement divisés ne possèdent qu'un seul espace creux.

3. Utilisation de la matière de revêtement selon la revendication 1, caractérisée en ce que les corps creux possèdent plusieurs espaces creux, sous la forme d'une structure interne alvéolaire.

4. Utilisation de la matière de revêtement selon l'une quelconque des revendications 1 à 3, caractérisée en ce que les corps creux finement divisés sont essentiellement étanches à la phase liquide de la matière de revêtement.

5. Utilisation de la matière de revêtement selon l'une quelconque des revendications 1 à 4, caractérisée en ce qu'elle contient, en tant que charge supplémentaire, de la poudre de coke et/ou de la poudre de charbon.